# EUROPÄISCHE PATENTSCHRIFT

(11) **EP 0 296 424 B1**
(45) Veröffentlichungstag und Bekanntmachung des Hinweises auf die Patenterteilung: **24.02.1993**
(21) Anmeldenummer: 88109270.4
(22) Anmeldetag: 10.06.1988
(51) Int. Cl.: G01B 11/16, G01N 21/84

(54) **Anordnung zur Messung von Verformungen an Proben oder Prüfkörpern in Prüfmaschinen**
Equipment for measuring deformations of probes or test samples in testing machines
Dispositif pour le mesurage des déformations des spécimens ou éprouvettes en machines d'essai

(30) Priorität: 19.06.1987 DE 3720248; 27.11.1987 DE 3740227
(43) Veröffentlichungstag der Anmeldung: 28.12.1988
(73) Patentinhaber: CARL SCHENCK AG, D-64273 Darmstadt (DE)
(72) Erfinder: Gernhart, Peter, D-8763 Klingenberg (DE); Hintz, Gerhard, D-6101 Rossdorf (DE); Keller, Günter, D-6101 Modautal 1 (DE); Treusch, Werner, D-6101 Fränkisch-Crumbach (DE); Zöller, Karl, D-6164 Alsbach-Hähnlein (DE); Jatho, Ralf, D-6104 Seeheim-Jugenheim (DE)
(74) Vertreter: Brandt, Ernst-Ulrich, Dipl.-Phys., Dipl.-Ing.

(56) Entgegenhaltungen:
- DE-C- 880 510
- FR-A- 2 567 264
- US-A- 3 592 545

## Beschreibung

Die Erfindung betrifft eine Anordnung zur Messung von Verformungen an Proben oder Prüfkörpern in Prüfmaschinen gemäß des Oberbegriffs der Patentansprüche 1 und 5.

Bei einem der zum Stand der Technik gemäß Art. 54/3 EPÜ gehörenden EP-A-02 55 552 zu entnehmenden Verfahren zur berührungslosen Messung von Längenänderungen an Bauteilen mit einer Laserlichtquelle und einer Signalverarbeitungsvorrichtung werden Blenden im Strahlengang der Lichtquelle angeordnet. Die Blenden werden hierbei so ausgebildet und am Meßobjekt befestigt, daß Längenänderungen des zu prüfenden Bauteils den Blendenquerschnitt und damit die Intensität des durch die Blende tretenden Lichtstrahls beeinflussen. Die Intensitätsänderung wird in ein elektrisches Signal umgewandelt und als Maß für die Verformung am Bauteil in einer Signalverarbeitungseinrichtungausgewertet und als Längenänderung dargestellt.

Aus der FR-A-2 567 264 ist eine Anordnung zur Messung von Verformungen an Proben bekannt, bei der an einer Probe in Längsrichtung beabstandet zwei Haltearme angeklemmt sind. Zur gleichzeitigen Messung von Längsdehnung und Torsionsverformungen ist auf dem ersten Haltearm ein konkaver Spiegel und an dem zweiten Haltearm ein Spiegelprisma derart befestigt, daß ausgehend von zwei Lichtquellen zwei Lichtstrahlen zunächst auf den konkaven Spiegel geworfen, von dort auf das Spiegelprisma reflektiert werden. Die Lichtstrahlen werden wieder zurück auf den konkaven Spiegel reflektiert und treffen anschließend auf jeweils einen ihnen zugeordneten Positionsdetektor auf.

Aus der DE-PS 880 510 ist eine Anordnung zum Messen des Verdrehwinkels zweier miteinander im gleichen Drehsinn und mit gleicher Winkelgeschwindigkeit umlaufender Wellen bekannt. In die Enden der beiden Wellen ist hierzu jeweils ein Planspiegel eingeschliffen. Desweiteren ist aus dieser Veröffentlichung eine Anordnung zur Messung der Verwindung einer Drehfeder eines Prüfstabes bekannt. Hierzu wird auf den Drehfederstab eine Büchse aufgebracht, wobei jeweils eine Spiegelfläche auf dem Drehfederstab und eine weitere Spiegelfläche auf der Büchse eingeschliffen ist.

Mit der vorliegenden Erfindung wird eine weitere Anordnung zur Messung von Verformungen bei in Prüfmaschinen eingespannten Proben bzw. Prüfkörpern nach den Merkmalen der Patentansprüche 1 und 5 vorgeschlagen. Die Erfindung stellt eine Erweiterung der bisherigen Möglichkeiten zur Dehnungsmessung an Prüfkörpern dar. Mit der erfindungsgemäßen Anordnung zur Messung von Verformungen ist es möglich, statische und/oder dynamische Verformungen durch Zug- und Druckkräfte sowie Verformungen infolge von Drehmomenten und Biegemomenten zu messen, wobei Verformungen im Mikrometer-Bereich erfasst werden können. Ebenso können Rißaufweitungen gemessen werden. Darüber hinaus ist insbesondere auch die gleichzeitige Messung von Axialverformungen und Verdrehungen unter statischen und dynamischen Zug-, Druck- und Torsionsbelastungen in Prüfmaschinen möglich. Für Messungen bei Schwingungsbelastungen sowie für Weg- und Geschwindigkeitsmessungen an extrem beschleunigten Proben oder Prüfkörpern, z. B. in Schnellzerreißmaschinen, ist das erfindungsgemäße Verfahren bzw. die erfindungsgemäße Ausgestaltung besonders geeignet.

Die weiteren Ansprüche betreffen zweckmäßige Ausgestaltungen der Erfindung einschließlich vorteilhafter Anwendungsmöglichkeiten.

In einer zweckmäßigen Ausführungsform machen beide Spiegel bzw. Spiegelflächen die Absolutbewegung der Maschine mit, wodurch diese Absolutbewegungen vollständig kompensiert werden. Die Positionierung von Lichtquelle, Spiegeln und Positionsdetektoren ist wesentlich vereinfacht. Durch die vereinfachte Positionierung dieser Elemente ergibt sich eine Verringerung des zu Meßfehlern führenden Winkelversatzes.

Eine besonders einfache und trotzdem genaue Positionierung ist bei einer Ausgestaltung gegeben, bei der die Strahlrichtung der Lichtquelle derart gewählt wird, daß der Strahl in einer rechtwinklig zu den Spiegelebenen verlaufenden Ebene und im wesentlichen rechtwinklig zur Längsachse bzw. Kraftübertragungsachse verläuft, wobei die beiden Spiegelebenen unter einem Winkel von 45° zur Längsachse bzw. Kraftübertragungsachse angeordnet werden.

Insbesondere bei schnell beschleunigten Proben ist es vorteilhaft, die Spiegel durch Spiegelflächen der Kraftübertragungselemente zu bilden.

Die Erfindung wird an Ausführungsbeispielen in den Zeichnungen schematisch dargestellt und in der Beschreibung näher erläutert. Es zeigen:
- Fig. 1: Meßprinzip der Verformungsmessung nach der Erfindung
- Fig. 2a: Anordnung zur gleichzeitigen Messung von Axial-und Torsionsverformungen an einer Probe in schematischer Darstellung,
- Fig. 2b: schematisch die Anordnung der Spiegel an der Probe nach Fig. 2a,
- Fig. 3: Anordnung zur Messung von Biegungen,
- Fig. 4: Anordnung zur Messung von Rißaufweitungen,
- Fig. 5: Anordnung zur Messung von schnellen Bewegungsabläufen an Proben
- Fig. 6a: Meßanordnung mit linienförmiger Lichtquelle,
- Fig. 6b: Draufsicht auf die Meßanordnung nach Fig. 6a,
- Fig. 7: Meßanordnung zur Verformungsmessung nach der Erfindung.

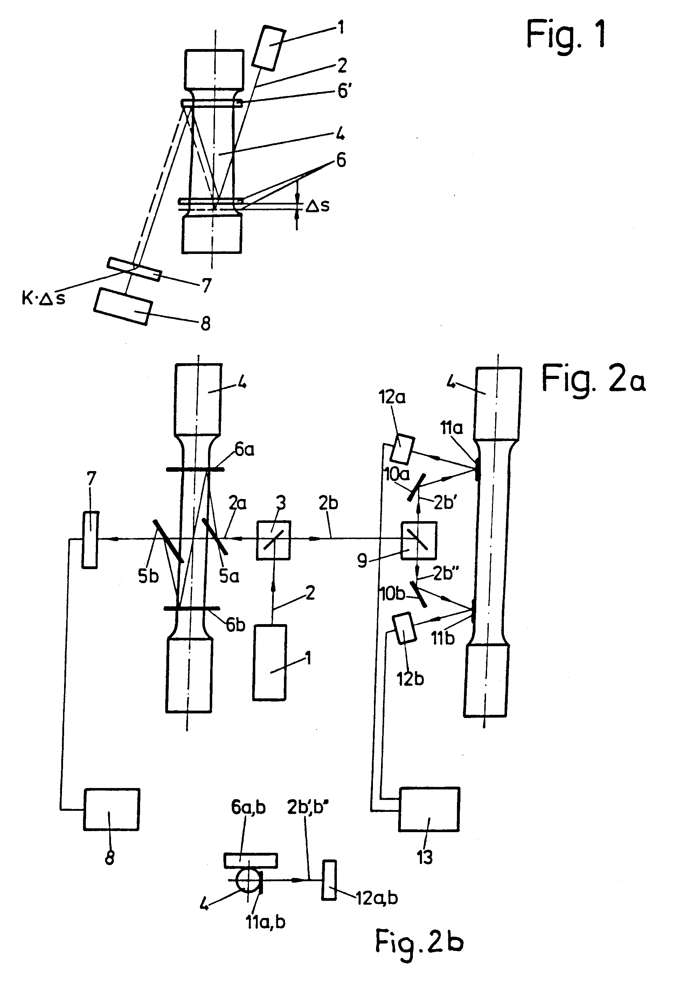

Fig. 1 zeigt eine punktförmige Lichtquelle 1, deren Strahl 2 in der dargestellten Weise über zwei Spiegel 6,6′ die an der Probe 4 (Rundprobe, Flachprobe usw.) befestigt sind, und deren Spiegelflächen senkrecht zur Probenlängsachse angeordnet sind, auf einen Positionsdetektor 7 gelenkt wird. Der Detektor ist in bekannter Weise als optisch-elektronischer Positionsdetektor ausgebildet und ermöglicht es, die Lage eines Lichtpunktes, der auf den Detektor geworfen wird, in einer nachgeschalteten Auswerteelektronik 8 mit hoher Genauigkeit zu erfassen. Der Lichtstrahl 2 kann über den Spiegel 6 auch direkt auf den Positionsdetektor 7 gelenkt werden, wenn der Detektor im Strahlengang des reflektierten Strahls angeordnet ist. Im dargestellten Beispiel ergibt sich bei Längenänderung Δ s der Probe 4 eine Strahlenablenkung, die im Positionsdetektor 7 abgebildet und in der Auswerteelektronik 8 ermittelt und z. B. angezeigt wird. Der Positionsdetektor 7 kann als einachsiger oder zweiachsiger Detektor ausgebildet sein, d. h. er kann Lichtpunktverschiebungen in einer oder zwei Achsen erfassen. Hierbei können Verformungen bzw. Abstände im Mikrometer-Bereich gemessen werden.

Für die kombinierte Messung von Axial- und Torsionsverformungen kann eine Anordnung nach Fig. 2 verwendet werden. Die Fig. 2a und 2b veranschaulichen schematisch die Anordnung von Spiegeln 6a, b und 11a, b an einer Probe 4. Von der Lichtquelle, insbesondere einer Laserlichtquelle 1, wird ein punktförmiger Strahl 2 erzeugt und mit einem optischen Strahlteiler 3 in zwei Teilstrahlen 2a und 2b zerlegt. Der Teilstrahl 2a wird zur Messung der Axialdehnung verwendet und über einen verstellbaren Umlenkspiegel 5a, zwei an der Probe angeordnete Spiegel 6a,b und einen weiteren verstellbaren Umlenkspiegel 5b auf den Positionsdetektor 7 geleitet. Die Spiegel 6a,b sind fest mit der Probe 4 verbunden. Der Abstand der Spiegel entspricht der Meßbasis eines herkömmlichen Dehnungsaufnehmers, ihre relative Abstandsänderung der Probenverformung, im dargestellten Beispiel einer Längsverformung.

Die Abstandänderung der Spiegel 6a,b wird über den Spiegel 5b als Positionsverschiebung des Strahles 2a auf dem Positionsdetektor 7 dargestellt. Der Detektor ist wieder als optisch-elektronischer Positionsdetektor ausgebildet, der die Position des Lichtpunktes in positionsproportionale Ströme umwandelt, die in der Auswerteelektronik in positionsproportionale Spannungen umgewandelt und als Abstandsänderungen dargestellt werden.

Es können sowohl analog als auch digital arbeitende Detektoren verwendet werden.

Bewegungen der Spiegel 6a,b aufgrund von Verformungen der Prüfmaschine werden durch die Gesamtanordnung des Spiegelsystems kompensiert, da beide Spiegel 6a, b die Bewegungen der Prüfmaschine mitmachen.

Der Teillichtstrahl 2b dient der Messung der Torsionsdehnung bzw. der Verdrehung der Probe 4 (Fig. 2a und Schnittdarstellung in Fig. 2b). Der Teilstrahl 2b wird zunächst in einem weiteren Strahlteiler 9 in Teilstrahlen 2b′ und b˝ zerlegt. Diese werden über die einstellbaren Spiegel 10a,b den mit der Probe verbundenen Spiegeln 11a,b zugeleitet, welche die Teilstrahlen 2b′ und 2b˝ auf die Positionsdetektoren 12a, b umlenken. Drehbewegungen der Spiegel 11a,b erzeugen auf den Detektoren 12a, b Positionsverschiebungen der Lichtpunkte und entsprechenden Photoströme. Diese stellen die Winkelbewegung bzw. Verdrehung der Spiegel 11a, b dar. Die den Positionsdetektoren 12a, b nachgeschaltete Auswerteelektronik 13 wandelt die Photoströme in elektrische Spannungen um. Aus den Winkelbewegungen der beiden Spiegel 11a, b werden die der Probenverformung entsprechenden Winkelwerte durch Subtraktion der elektrischen Signale der beiden Positionsdetektoren 12a, b gebildet. Geometriefehler des Spiegelsystems werden automatisch kompensiert.

Bei der beschriebenen Anordnung kann der Abstand der Spiegel 6a, b und der Einstrahlwinkel des Lichtstrahls an die jeweilige Prüfaufgabe angepaßt werden. Hierdurch lassen sich nahezu beliebige Meßbasen und Meßwege erzielen.

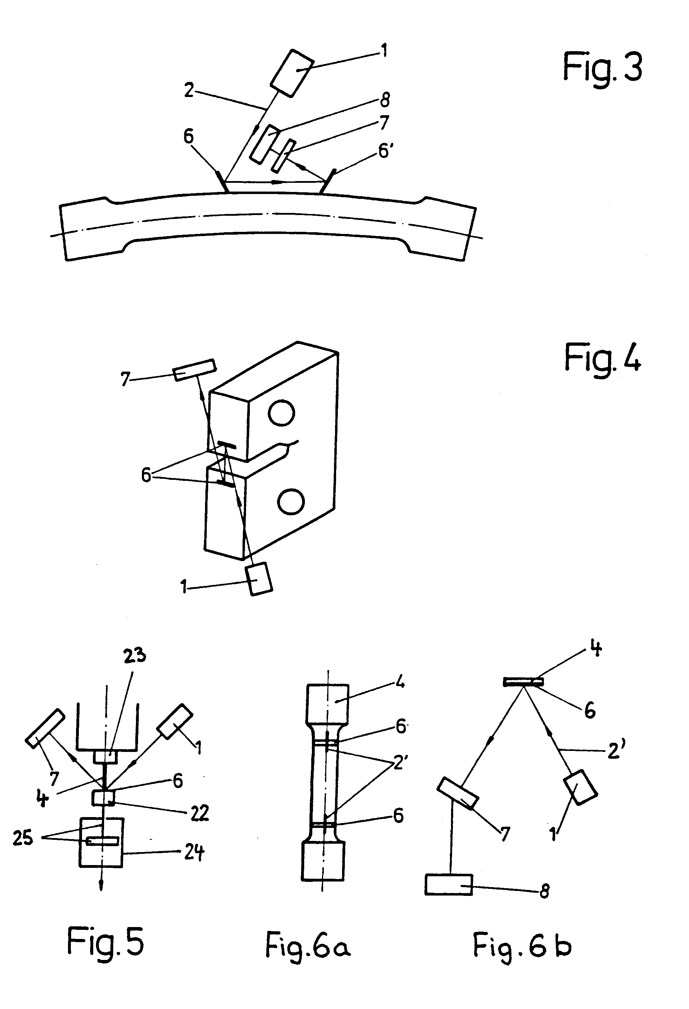

Fig. 3 zeigt eine Anordnung zur Erfassung von Verformungen, die durch Biegung entstehen. Der von der Lichtquelle 1 kommende Lichtstrahl 2 wird über die mit der Probe 4 verbundenen Spiegel 6, 6′ auf den Positionsdetektor 7 geleitet, der mit der Auswerteelektronik 8 verbunden ist. Hierbei können auch zweiachsige Detektoren verwendet werden, so daß mit der gleichen Gesamtanordnung sowohl Längsdehnungen (Verformungen in axialer Richtung der Probe) als auch Verformungen durch Biegung erfaßt werden können.

Fig. 4 zeigt eine Anordnung zur Erfassung von Rißaufweitungen an CT-Proben (CT=Compact Tension) in perspektivischer Darstellung mit der Lichtquelle 1, Spiegeln 6 und Positionsdetektor 7.

In Fig. 5 ist eine Anordnung zur Messung der Probenverformung und/oder der Verformungsgeschwindigkeit bei Schnellzerreißmaschinen dargestellt. Bei solchen Maschinen ist die Messung unmittelbar an der Probe äußerst aufwendig. Die Probe 4 ist zwischen Kraftübertragungseinheiten 22, 23 eingespannt. Beim Test wird beispielsweise die Kraftübertragungseinheit 22 sehr schnell in der durch den Pfeil angedeuteten Richtung von der Kraftübertragungseinheit 23 wegbewegt, beispielsweise durch Anschlagen eines beschleunigten Bauteils 24 an einem Übertragungsgestänge 25. Durch die Anordnung eines Spiegels oder einer spiegelnden Fläche 6 an einem mit der Probe verbundenen Einspannungsteil (Kraftübertragungseinheit 22), bietet sich die Möglichkeit, mit geringem Aufwand brauchbare Meßergebnisse zu erzielen. Der von der Lichtquelle 1 kommende Lichtstrahl wird durch den Spiegel oder die spiegelnde Fläche 6 auf den Positionsdetektor 7 reflektiert und in einer Auswerteelektronik ausgewertet. Mit der dargestellten Anordnung kann die in die Proben eingeleitete Verformung sowie die Verformungsgeschwindigkeit bei Prüfabläufen mit hohen Geschwindigkeiten ermittelt werden.

Die in der Beschreibung erwähnten Positionsdetektoren einschließlich Auswerteelektronik sind bekannt, so daß die Angabe weiterer Einzelheiten hierzu nicht erforderlich ist.

In Fig. 6 ist eine Anordnung zur Verformungsmessung mit einer linienförmigen Lichtquelle dargestellt; die Fig. 6a ist eine schematische Vorderansicht, die Fig. 6b eine schematische Draufsicht auf die Anordnung. Auf der Oberfläche einer Probe 4 (im dargestellten Beispiel einer Flachprobe) sind schmale, bandförmige Spiegel 6 angeordnet. Der Abstand der Spiegel stellt die Meßbasis dar. Von der Lichtquelle 1 wird ein linienförmiger Lichtstrahl 2' so auf jeden Spiegel geworfen, daß er mit dem bandförmigen Spiegel 6 einen rechten Winkel bildet. Die Breite des linienförmigen Lichtstrahls wird so gewählt, daß sie dem erwarteten Meßweg an der Probe entspricht. An der Spiegelfläche entsteht durch den linienförmigen Lichtstrahl 2′ ein Lichtpunkt, der auf einen jedem Spiegel zugeordneten Positionsdetektor 7 geworfen wird. In der Auswerteelektronik 8 wird, ähnlich wie bei Fig. 2 beschrieben, die Lage der Lichtpunkte, die den Verformungen der Probe entsprechen, ausgewertet.

Bei der beschriebenen Anordnung ist es zweckmäßig, digital arbeitende Positionsdetektoren zu verwenden, da mit solchen Detektoren die Unterdrückung von Streulichteinflüssen mit elektronischen Mitteln leicht möglich ist.

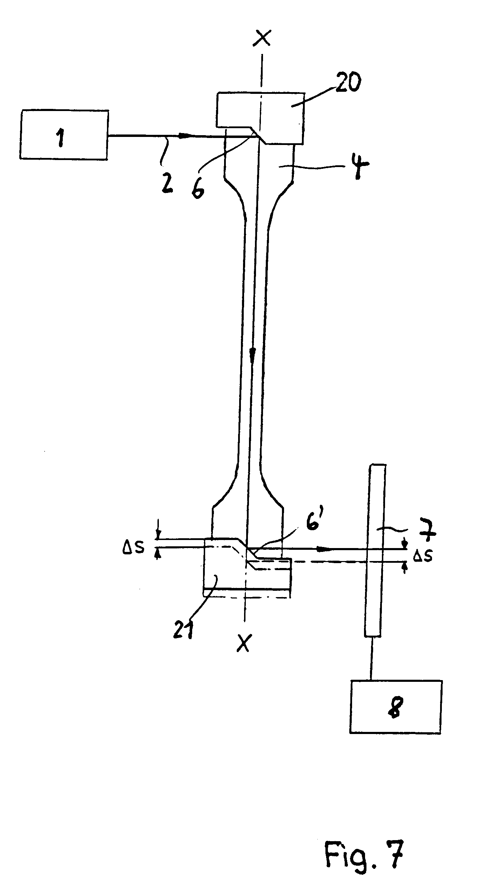

Bei der Anordnung nach Fig. 7 ist die zu untersuchende Probe 4 (Flachprobe, Rundprobe) in zwei Kraftübertragungseinheiten 20, 21 einer nicht näher dargestellten Prüfmaschine eingespannt. Jede Kraftübertragungseinheit 20, 21 weist Klemmbacken auf, mit denen die Probe 4 festgehalten werden kann. Bei Kraftbeaufschlagung der Probe 4 über die Kraftübertragungseinheiten 20, 21 stellt sich eine Verformung der Probe 4 ein, die lichtoptisch ermittelt wird.

Der Lichtstrahl 2 einer punktförmigen Lichtquelle 1 wird auf eine Spiegelfläche 6 an einem Bereich der Kraftübertragungseinheit 20, im Beispiel auf die Spiegelfläche 6 der Klemmbacke der Kraftübertragungseinheit 20, gerichtet. Die Spiegelfläche kann an der Klemmbacke ausgeformt und durch entsprechende Bearbeitung wie z. B. Schleifen und Polieren hergestellt sein. Es kann jedoch auch ein separates Spiegelelement an der Klemmbacke beispielsweise durch Kleben befestigt sein. An der Spiegelfläche 6 wird der Lichtstrahl 2 umgelenkt und läuft parallel zur Längsachse X-X der Probe 4 bzw. der Kraftübertragungsachse in Richtung auf die Kraftübertragungseinheit 21. Der Lichtstrahl 2 trifft auf eine Spiegelfläche 6′ an der Klemmbacke dieser Kraftübertragungseinheit 21 und wird dort in Richtung auf den Positionsdetektor 7 umgelenkt. Die der Lichtquelle 1 zugeordnete Kraftübertragungseinheit 20 kann als bei der Verformung der Probe 4 feststehende oder als bei der Verformung der Probe 4 sich entsprechend bewegende Kraftübertragungseinheit vorgesehen sein; im ersten Fall bewegt sich dann die Kraftübertragungseinheit 21 entsprechend der Probenverformung, im zweiten Fall ist die Kraftübertragungseinheit 21 feststehend angeordnet. Die im dargestellten Beispiel bei einer Probenverformung feststehende Kraftübertragungseinheit 20 und die Lichtquelle 1 können vorteilhaft an der Quertraverse einer Prüfmaschine angeordnet sein. Dabei kann die Lichtquelle 1 mit der Kraftübertragungseinheit verbunden sein.

Im Ausführungsbeispiel verläuft die Richtung des aus der Lichtquelle 1 austretenden Strahls orthogonal zu der durch die Längsachse X-X der Probe 4 bzw. die Kraftübertragungsachse definierten Richtung. Die Spiegelebenen der beiden Spiegel sind unter 45° zur Längsachse, einander zugewandt und zueinander parallel angeordnet. Die Abschnitte des Lichtstrahls 2 zwischen Lichtquelle 1 und Spiegelfläche 6, zwischen den beiden Spiegelflächen 6 und 6′ und zwischen der Spiegelfläche 6′ und dem Positionsdetektor 7 liegen alle in einer gemeinsamen Ebene, zu der die Spiegelebenen orthogonal angeordnet sind. Die Lichtquelle 1 liegt auf einer seite der Längsachse X-X, während der Positionsdetektor 7 auf der anderen seite der Längsachse X-X angeordnet ist.

Im dargestellten Beispiel ergibt sich bei einer Längenänderung Δ s der Probe 4 eine Strahlablenkung, die im Detektor abgebildet und in der Auswerteelektronik ermittelt und z. B. angezeigt wird.

Es können sowohl analog als auch digital arbeitende Detektoren verwendet werden.

Wie sich aus der Darstellung leicht erkennen läßt, führen Absolutbewegungen der Prüfmaschine in vertikaler Richtung, d. h. Bewegungen der skizzierten Anordnung nach oben oder unten, die von der Probe 4 und den Spiegeln 6, 6′ mitgemacht werden, nicht zu Beeinträchtigungen des Meßergebnisses, da die Absolutbewegungen vollständig kompensiert werden. Werden beide Spiegel beispielsweise in belastungsfreiem Zustand in gleicher vertikaler Richtung um jeweils den gleichen Weg verschoben, so ändert sich der Auftreffort des Lichtstrahls 2 auf dem Positionsdetektor 7 auch dann nicht, wenn Lichtquelle 1 und Positionsdetektor 7 die Absolutbewegungen nicht mitmachen.

Das dargestellte Ausführungsbeispiel nach Fig. 7 ist besonders geeignet zur Messung der Probenverformung und/oder Verformungsgeschwindigkeit bei Schnellzerreißmaschinen. Bei solchen Maschinen ist die Messung unmittelbar an der Probe äußerst aufwendig. Mit der dargestellten Anordnung kann die in die Probe eingeleitete Verformung sowie die Verformungsgeschwindigkeit bei Prüfabläufen mit hohen Geschwindigkeiten ermittelt werden. Mit dieser Anordnung lassen sich statische und/oder dynamische Verformungen durch Zug- oder Druckkräfte sowie Verformungen infolge von Drehmomenten und Biegemomenten erfassen, wobei die Verformungen im Mikrometerbereich liegen können. Es können auch Rißaufweitungen gemessen werden.

Bei der in Fig. 7 beschriebenen Anordnung ist es zweckmäßig, digital arbeitende Positionsdetektoren zu verwenden, da mit solchen Detektoren die Unterdrückung von Streulichteinflüssen mit elektronischen Mitteln leicht möglich ist. Der Positionsdetektor 7 kann als einachsiger oder zweiachsiger Detektor ausgebildet sein, d. h. er kann Lichtpunktverschiebungen in einer oder zwei Achsen erfassen. Hierbei können Verformungen bzw. Abstände im Mikrometerbereich gemessen werden.

## Patentansprüche

1. Anordnung zur Messung von Verformungen an Proben oder Prüfkörpern, mit einer punktförmigen Lichtquelle (1), mindestens einen an mindestens einem mit der Probe (4) bzw. dem Prüfkörper verbundenen Bauteil an geeigneter Stelle angeordneten Spiegel (6, 6') zur Umlenkung des von der Lichtquelle kommenden Lichtstrahls (2), mindestens einen im Strahlengang des vom Spiegel (6, 6') kommenden Lichstrahls (2) angeordneten Positionsdetektor (7), eine Auswerteelektronik (8) zur Bestimmung und Auswertung der Lage des auf den Positionsdetektor auftreffenden Lichtstrahls, dadurch gekennzeichnet, daß das Bauteil als Kraftübertragungseinheit (20, 21, 22) ausgebildet ist.

2. Anordnung nach Anspruch 1, dadurch gekennzeichnet, daß die Spiegel (6, 6') durch Spiegelflächen der Kraftübertragungselemente (20, 21, 22) gebildet werden.

3. Anordnung nach Anspruch 1 oder 2, dadurch gekennzeichnet, daß die Lichtquelle (1) mit Ihrer Strahlachse rechtwinklig zur Längsachse (X-X) bzw. Kraftübertragungsachse und in einer rechtwinklig zu den Spiegelebenen verlaufenden Ebene angeordnet ist, wobei die Spiegelebenen unter einem Winkel von 45° zur Längsachse bzw. Kraftübertragungsachse und zueinander parallel angeordnet sind.

4. Anordnung nach einem der vorhergehenden Ansprüche, dadurch gekennzeichnet, daß die Kraftübertragungselemente (20, 21, 22, 23) an den Enden der Proben (4) bzw. der Prüfkörper angeordnet werden.

5. Anordnung zur Messung von Verformungen an Proben oder Prüfkörpern, mit mindestens einer Lichtquelle (1), mindestens einem Spiegel zur Umlenkung des von der Lichtquelle kommenden Lichtstrahls, mindestens einen im Strahlengang des vom Spiegel (6, 6'; 6a, b; 11a, b) kommenden Lichtstrahls (2, 2') angeordneten Positionsdetektor (7; 12a, b), eine Auswerteelektronik (8, 13) zur Bestimmung und Auswertung der Lage des auf den Positionsdetektor auftreffenden Lichtstrahls, dadurch gekennzeichnet, daß mindestens ein Spiegel (6, 6'; 6a, 6b, 11a, 11b) direkt an der Probe (4) bzw. dem Prüfkörper befestigt ist.

6. Anordnung nach Anspruch 5, dadurch gekennzeichnet, daß im Strahlengang der Lichtquelle (1) zwei Spiegel (6, 6', 6a, b; 11a, b) an der Probe (4) bzw. dem Prüfkörper angeordnet sind.

7. Anordnung nach Anspruch 6, dadurch gekennzeichnet, daß die Spiegelebenen der Spiegel unter einem Winkel zur Längsachse (X-X) der Probe (4) oder des Prüfkörpers bzw. der Kraftübertragungsachse und zueinander parallel angeordnet sind.

8. Anordnung nach Anspruch 5, dadurch gekennzeichnet, daß im Strahlengang der Lichtquelle (1) feste und/oder verstellbare Strahlteiler (3, 9) und/oder Umlenkspiegel (5a, b; 10a, b) angeordnet sind.

9. Anordnung nach Anspruch 5, dadurch gekennzeichnet, daß zwei mit einer gemeinsamen Auswerteelektronik (13) verbundene Positionsdetektoren (12a, b) vorgesehen sind.

10. Anordnung nach einem oder mehreren der vorhergehenden Ansprüche, dadurch gekennzeichnet, daß der Positionsdetektor (7) als ein- oder zweiachsiger Detektor ausgebildet ist.

11. Anordnung nach einem oder mehreren der vorhergehenden Ansprüche, dadurch gekennzeichnet, daß der Positionsdetektor (7) als analog oder digital arbeitender Detektor ausgebildet ist.

12. Anordnung nach einem der vorhergehenden Ansprüche, dadurch gekennzeichnet, daß an der Probe (4) bzw. dem Prüfkörper zwei bandförmige Spiegel (6) angeordnet sind, denen jeweils ein linienförmiger Lichtstrahl (2') und ein Positionsdetektor (7) zugeordnet sind.

13. Anordnung nach einem oder mehreren der vorhergehenden Ansprüche, dadurch gekennzeichnet, daß die Lichtquelle (1) als Laserlichtquelle ausgebildet ist.

## Claims

1. Arrangement for the measurement of deformations to sample or test pieces with a punctiform light source (1), at least one mirror (6,6') arranged in a suitable spot on at least one component connected to the sample (4) or test piece, for the deflection of the light beam (2) emitted by the light source, at least one position detector (7) arranged in the beam path of the light beam (2) coming from the mirror (6,6'), an electronic evaluation unit (8) to determine and evaluate the position of the light beam hitting the position detector characterised in that the component is designed as a force transmission unit (20,21,22).

2. Arrangement according to claim 1 characterised in that the mirrors (6,6') are formed by mirror surfaces of the force transmission elements (20, 21,22).

3. Arrangement according to claims 1 or 2 characterised in that the light source (1) is arranged with its beam axis at right angles to the longitudinal axis (X-X) or force transmission axis and in a plane running at right angles to the reflection planes, whereby the reflection planes are arranged at an angle of 45° to the longitudinal axis or force transmission axis and parallel to each other.

4. Arrangement according to one of the above claims characterised in that the force transmission elements (20,21,22,23) are arranged at the ends of the sample (4) or test pieces.

5. Arrangement for the measurement of deformations to sample or test pieces with at least one light source (1), at least one mirror to deflect the light beam emitted by the light source, at least one position detector (7,12a,b) arranged in the beam path of the light beam (2,2') coming from the mirror (6,6'; 6a,b; 11a,b), an electronic evaluation unit (8,13) to determine and evaluate the position of the light beam hitting the position detector characterised in that at least one mirror (6,6'; 6a,6b; 11a,11b) is attached directly to the sample (4) or test piece.

6. Arrangement according to claim 5 characterised in that in the beam path of the light source (1) two mirrors (6,6'; 6a,b; 11a,b) are arranged at the sample (4) or test piece.

7. Arrangement according to claim 6 characterised in that the reflective planes of the mirrors are arranged at an angle to the longitudinal axis (X-X) of the sample (4) or test piece or the force transmission axis and parallel to each other.

8. Arrangement according to claim 5 characterised in that in the beam path of the light source (1) fixed and/or adjustable beam splitters (3,9) and/or deviation mirrors (5a,b; 10a,b) are arranged.

9. Arrangement according to claim 5 characterised in that two position detectors (12a,b) connected to a joint electronic evaluation unit (13) are provided.

10. Arrangement according to one or more of the above claims characterised in that the position detector (7) is designed as a uniaxial or biaxial detector.

11. Arrangement according to one or more of the above claims characterised in that the position detector (7) is designed as an analog or digital detector.

12. Arrangement according to one of the above claims characterised in that the two band-shaped mirrors (6) are arranged on the sample (4) or test piece, to each of which a linear light beam (2') and a position detector (7) has been allocated.

13. Arrangement according to one or more of the above claims characterised in that the light source (1) is designed as a laser light source.

## Revendications

1. Dispositif de mesure de déformations subies par des spécimens ou des corps d'essai, comportant une source lumineuse (1) ponctuelle, au moins un miroir (6, 6'), monté en un point approprié, sur au moins un composant relié à le spécimen (4) ou au corps d'essai, afin de dévier le faisceau lumineux (2) provenant de la source lumineuse, au moins un détecteur de position (7) monté dans le parcours du faisceau lumineux (2) provenant du miroir (6, 6'), un dispositif électronique d'exploitation destiné à déterminer et à analyser la position du faisceau lumineux parvenant sur le détecteur de position, caractérisé en ce que le composant est conçu sous la forme d'un bloc de transmission de force (20, 21, 22).

2. Dispositif selon la revendication 1, caractérisé en ce que les miroirs (6, 6') sont formés par des surfaces réfléchissantes des éléments de transmission de force (20, 21, 22).

3. Dispositif selon la revendication 1 ou 2, caractérisé en ce que l a source lumineuse (1) est montée de manière que son axe de faisceau soit perpendiculaire à l'axe longitudinal (X-X) ou à l'axe de transmission de force et dans un plan perpendiculaire aux plans des miroirs, les plans des miroirs formant un angle de 45° par rapport à l'axe longitudinal ou à l'axe de transmission de force et étant parallèles entre eux.

4. Dispositif selon l'une des revendications précédentes, caractérisé en ce que les éléments de transmission de force (20, 21, 22, 23) sont montés aux extrémités des spécimens (4) ou des corps d'essai.

5. Dispositif de mesure de déformations subies par des spécimens ou des corps d'essai, comportant au moins une source lumineuse (1), au moins un miroir afin de dévier le faisceau lumineux provenant de la source lumineuse, au moins un détecteur de position (7 ; 12a, b), placé dans le parcours du faisceau lumineux (2, 2') provenant du miroir (6, 6' ; 6a, b ; 11a, b), un dispositif électronique d'exploitation (8, 13) afin de déterminer et d'analyser la position du faisceau lumineux parvenant sur le détecteur de position, caractérisé en ce qu'un miroir (6, 6' ; 6a, 6b, 11a, b) au moins est directement fixé sur le spécimen (4) ou le corps d'essai.

6. Dispositif selon la revendication 5, caractérisé en ce que deux miroirs (6, 6', 6a, b ; 11a, b) sont placés dans le parcours du faisceau de la source lumineuse (1), sur le spécimen (4) ou le corps d'essai.

7. Dispositif selon la revendication 6, caractérisé en ce que les plans des miroirs forment un angle par rapport à l'axe longitudinal (X-X) de le spécimen (4) ou du corps d'essai ou de l'axe de transmission de force et sont parallèles entre eux.

8. Dispositif selon la revendication 5, caractérisé en ce que des diviseurs de faisceau fixes et/ou réglables (3, 9) et/ou des miroirs de déviation (5a, b ; 10a, b) sont placés dans le parcours du faisceau de la source lumineuse (1).

9. Dispositif selon la revendication 5, caractérisé en ce qu'il est prévu deux détecteurs de position (12a, b), reliés à un dispositif électronique d'exploitation (13) commun.

10. Dispositif selon une ou plusieurs des revendications précédentes, caractérisé en ce que le détecteur de position (7) est un détecteur à un axe ou à deux axes.

11. Dispositif selon une ou plusieurs des revendications précédentes, caractérisé en ce que le détecteur de position (7) est un détecteur analogique ou numérique.

12. Dispositif selon l'une des revendications précédentes, caractérisé en ce que sur le spécimen (4) ou le corps d'essai sont placés deux miroirs (6) en forme de bande à chacun desquels est associé un faisceau lumineux (2') en forme de ligne et un détecteur de position (7).

13. Dispositif selon une ou plusieurs des revendications précédentes, caractérisé en ce que la source lumineuse (1) est une source laser.
